# EUROPÄISCHE PATENTSCHRIFT

(11) **EP 3 928 392 B1**
(45) Veröffentlichungstag und Bekanntmachung des Hinweises auf die Patenterteilung: **14.12.2022**
(21) Anmeldenummer: 20707552.4
(22) Anmeldetag: 09.01.2020
(51) Int. Cl.: H02B 1/38, E05D 5/00, E05D 7/00, E05D 7/10

(54) **SCHARNIERANORDNUNG FÜR EINEN SCHALTSCHRANK UND EIN ENTSPRECHENDES VERFAHREN**
HINGE ASSEMBLY FOR AN ELECTRICAL CABINET AND CORRESPONDING METHOD
CHARNIÈRE POUR UNE ARMOIRE ÉLECTRIQUE ET PROCÉDÉ CORRESPONDANT

(30) Priorität: 18.02.2019 DE 102019103997
(43) Veröffentlichungstag der Anmeldung: 29.12.2021
(73) Patentinhaber: Rittal GmbH & Co. KG, 35745 Herborn (DE)
(72) Erfinder: BÄUMER, Carsten, 57258 Freudenberg (DE); HERR, Jacob, 35745 Herborn (DE)
(74) Vertreter: Angerhausen, Christoph
(86) Internationale Anmeldenummer: PCT/DE2020/100011
(87) Internationale Veröffentlichungsnummer: WO 2020/169138

(56) Entgegenhaltungen:
- EP-A2- 0 157 344
- CN-A- 105 888 420
- DE-A1- 2 049 174
- DE-A1- 2 426 307
- DE-A1- 3 834 053
- DE-B3-102016 117 378
- DE-B3-102017 108 586
- DE-U- 7 222 203
- DE-U1- 29 605 809
- ES-A1- 2 154 084
- FR-A- 1 386 092
- FR-A1- 2 704 268

## Beschreibung

Die Erfindung geht aus von einer Scharnieranordnung für einen Schaltschrank.

Eine derartige Scharnieranordnung ist aus der EP 0 157 344 A2 bekannt. Ähnliche Anordnungen zeigen auch die DE 10 2016 117 378 B3, DE 10 2017 108 586 B3, CN 105 888 420 A, FR 2 704 268 A1, ES 2 154 084 A1, DE 296 05 809 U1, DE 38 34 053 A1, FR 1 386 092 A, DE 20 49 174 A1 und DE 72 22 203 U1.

Die aus dem Stand der Technik bekannten Scharnieranordnungen haben den Nachteil, dass die Schaltschranktür mitunter ein erhebliches Gewicht aufweist und sperrig im Umgang ist, wodurch das manuelle Ansetzen der Schaltschranktür am Schaltschrankkorpus Schwierigkeiten bereiten kann. Hinzu kommt, dass Schaltschränke häufig mit mehr als zwei Scharnieren am Schaltschrankkorpus angeschlagen sind. Häufig sind mindestens drei vertikal übereinander angeordnete Scharniere vorgesehen. Demgemäß ist für das Ansetzen der Schaltschranktür am Schaltschrankkorpus erforderlich, dass gleichzeitig drei vertikal übereinander angeordnete türseitige Scharnierhälften, die jeweils eine Scharnierbolzenaufnahme aufweisen, mit drei korpusseitigen Scharnierhälften, insbesondere mit deren jeweiligem Scharnierbolzen in die Flucht gebracht werden, so dass die Schaltschranktür über die Scharnierbolzenaufnahmen auf die übereinander angeordneten Scharnierbolzen abgesenkt werden kann.

Es ist daher die Aufgabe der Erfindung, eine Scharnieranordnung der eingangs beschriebenen Art derart weiterzuentwickeln, dass sie eine leichte Montage der Schaltschranktür am Schaltschrankkorpus ermöglicht.

Diese Aufgabe wird durch eine Scharnieranordnung mit den Merkmalen des Anspruchs 1 gelöst. Ein Verfahren für die Montage einer Schaltschranktür unter Verwendung einer solche Scharnieranordnung ist auch in Anspruch 14 definiert.

Die abhängigen Ansprüche betreffen jeweils vorteilhafte Ausführungsformen der Erfindung.

Demgemäß ist vorgesehen, dass der erste Scharnierbolzen zwischen einer Montagehilfsposition und einer Endposition in Vertikalrichtung verstellbar in dem ersten Bolzensitz aufgenommen ist, wobei der erste Scharnierbolzen in der Endposition um eine dritte Länge aus dem ersten Bolzensitz heraussteht, die kleiner als die erste Länge ist und die im Wesentlichen identisch zu der zweiten Länge ist, und wobei der erste Scharnierbolzen in der Montagehilfsposition eine Rastposition einnimmt.

Dadurch kann beispielsweise erreicht werden, dass beim Montagevorgang zunächst die Scharnierhälften eines oberen Scharniers mit dem Scharnierbolzen in der Montagehilfsposition miteinander in Eingriff gebracht werden können, bevor, gegebenenfalls nach einer ergänzenden Ausrichtung der Schaltschranktür in Bezug auf den Schaltschrankkorpus, die Scharnierhälften mindestens eines weiteren Scharniers miteinander in Eingriff gebracht werden können. Da der Scharnierbolzen in der Montagehilfsposition weiter aus seinem Bolzensitz herausragt als der Scharnierbolzen einer weiteren korpusseitigen Scharnierhälfte aus seinem jeweiligen Bolzensitz, ist es möglich, dass die korpusseitige Scharnierhälfte mit dem Scharnierbolzen in der Montagehilfsposition mit ihrer zugeordneten türseitigen Scharnierhälfte in Eingriff gebracht wird, ohne dass dazu zwangsläufig auch die weitere korpusseitige Scharnierhälfte mit ihrer zugeordneten türseitigen Scharnierhälfte in Eingriff gebracht werden muss.

Um zu erreichen, dass die Scharniere der Scharnieranordnung und insbesondere die korpusseitigen Scharnierhälften als Gleichteile ausgebildet werden können, ist vorgesehen, dass der erste Scharnierbolzen zwischen der Montagehilfsposition und einer Endposition in Vertikalrichtung verstellbar in dem ersten Bolzensitz aufgenommen ist, wobei der erste Scharnierbolzen in der Endposition um eine dritte Länge aus dem ersten Bolzensitz heraussteht, die kleiner als die erste Länge ist. Hierbei kann vorgesehen sein, dass die dritte Länge gerade im Wesentlichen identisch zu der ersten Länge ist. Bei dieser Ausführungsform kann vorgesehen sein, dass auch während des Montagevorgangs der Schaltschranktür am Schaltschrankkorpus beispielsweise eine unterste türseitige Scharnierhälfte mit in Vertikalrichtung verstellbarem Scharnierbolzen ausschließlich in der Endposition des Scharnierbolzens verwendet wird, da für diese korpusseitige Scharnierhälfte keine Montagehilfsposition für die Montage der Schaltschranktür am Schaltschrankkorpus erforderlich ist, wenn die übrigen korpusseitigen Scharnierhälften jeweils eine Montagehilfsposition aufweisen. Die korpusseitige Scharnierhälfte ohne Montagehilfsposition muss jedoch nicht zwingend eine unterste korpusseitige Scharnierhälfte sein. Auch jede andere korpusseitige Scharnierhälfte kann diese Funktion aufweisen.

Zumindest der erste Scharnierbolzen kann einen Anschlag aufweisen, über den der erste Scharnierbolzen in der Endposition an dem ersten Bolzensitz anliegt, wobei der Anschlag in der Montagehilfsposition um einen Abstand oberhalb von dem ersten Bolzensitz angeordnet ist. Der Anschlag kann ein am Außenumfang des Scharnierbolzens vorstehender Flansch, vorzugsweise ein umlaufend vorstehender Flansch sein.

Der Anschlag kann in der Endposition in einer Ausnehmung an einer Oberseite des ersten Bolzensitzes aufgenommen sein. Dabei kann der Anschlag in der Endposition mit einer oberen Anlagefläche des ersten Bolzensitzes fluchten, so dass der Anschlag und die obere Anlagefläche ein Auflager für die erste türseitige Scharnierhälfte bilden.

Der erste Scharnierbolzen kann eine weitere Montagehilfsposition aufweisen, in der der erste Scharnierbolzen um eine vierte Länge aus dem ersten Bolzensitz heraussteht, die kleiner als die erste Länge ist.

Der erste Scharnierbolzen kann in mindestens einer weiteren Montagehilfsposition eine Rastposition einnehmen.

In der Rastposition kann ein an dem ersten Bolzensitz zumindest einseitig angelegtes Federelement in eine Rastkerbe am Außenumfang des ersten Scharnierbolzens eingreifen. Dabei kann der erste Scharnierbolzen in einer weiteren Montagehilfsposition mit einer Anlaufschräge auf dem Federelement aufliegen. Die Anlaufschräge kann an dem Ende des Bolzens ausgebildet sein, über den sich der Bolzen in einen Bolzenkanal des Bolzensitzes hinein erstreckt.

Das Federelement kann in einer in einen ersten Bolzensitzkanal des ersten Bolzensitzes mündenden und von der Außenseite des ersten Bolzensitzes zugänglichen Federaufnahme angeordnet sein. Die Federaufnahme kann sich gegenüberliegende und voneinander beabstandete Lagerflächen für ein Spannende des Federelements ausweisen. In mindestens einer Rastposition kann das Spannende an einer ersten der beiden Lagerflächen anliegen, die in den Bolzensitzkanal mündet.

Der erste Scharnierbolzen kann in einer von einer der Rastpositionen unterschiedlichen Position das Spannende von dem ersten Scharnierbolzen unter einer Vorspannung gegen die zweite der beiden Lagerflächen gedrückt sein, die unter einem Abstand zu dem Bolzensitzkanal angeordnet ist.

Der erste Scharnierbolzen kann am Außenumfang seines oberen Endes, mit dem der erste Scharnierbolzen in der Endposition aus dem ersten Bolzensitz heraussteht, eine umlaufende Einkerbung aufweisen. Die Einkerbung kann dazu dienen, das Verlagern des Scharnierbolzens aus der Endposition in mindestens eine Montagehilfsposition zu erleichtern, wozu der Scharnierbolzen aus seinem Bolzensitz zumindest anteilig herausgezogen werden muss.

Gemäß einem anderen Aspekt wird ein Verfahren für die Montage einer Schaltschranktür an einen Schaltschrankkorpus unter Verwendung einer Scharnieranordnung der zuvor beschriebenen Art beschrieben. Das Verfahren weist die Schritte auf:
- Positionieren des Scharnierbolzens einer ersten korpusseitigen Scharnierhälfte, die oberhalb oder unterhalb von einer zweiten korpusseitigen Scharnierhälfte angeordnet ist, in einer Montagehilfsposition, in der der Scharnierbolzen der ersten korpusseitigen Scharnierhälfte um eine Länge aus seinem Bolzensitz herausragt, die größer als eine Länge ist, um die der Scharnierbolzen der zweiten korpusseitigen Scharnierhälfte aus seinem Bolzensitz herausragt;
- Ansetzen der Schaltschranktür an den Schaltschrankkorpus, wobei die erste türseitige Scharnierhälfte, die oberhalb von einer zweiten türseitigen Scharnierhälfte angeordnet ist, nur anteilig auf den Scharnierbolzen der ersten korpusseitigen Scharnierhälfte aufgeschoben wird, wobei die zweite türseitige Scharnierhälfte vollständig oberhalb von der zweiten korpusseitigen Scharnierhälfte angeordnet ist;
- Ausrichten der Schaltschranktür in Bezug auf den Schaltschrankkorpus, so dass eine Scharnierbolzenaufnahme der zweiten türseitigen Scharnierhälfte mit dem Scharnierbolzen der zweiten korpusseitigen Scharnierhälfte fluchtet; und
- Absenken der Schaltschranktür, wobei die zweite türseitige Scharnierhälfte auf dem Scharnierbolzen der zweiten korpusseitigen Scharnierhälfte aufgeschoben wird, wobei der erste Scharnierbolzen aus der Montagehilfsposition in die Endposition überführt wird.

Bei dem Ansetzen der Schaltschranktür an den Schaltschrankkorpus kann die erste türseitige Scharnierhälfte bis zu einem Anschlag am Außenumfang des Scharnierbolzens auf den Scharnierbolzen aufgeschoben werden. Dazu kann bei dem Positionieren des Scharnierbolzens der Scharnierbolzens in seiner Montagehilfsposition mit dem Anschlag beabstandet von einer Oberseite eines Bolzensitzes der türseitigen Scharnierhälften angeordnet werden.

Bei dem Absenken der Schaltschranktür kann der erste Scharnierbolzen aus der Montagehilfsposition in die Endposition überführt werden. Dazu kann die erste türseitige Scharnierhälfte auf den Anschlag oder Flansch, der am Außenumfang des ersten Scharnierbolzens vorgesehen ist, zur Anlage kommen, so dass beim weiteren Absenken der Schaltschranktür der Scharnierbolzen über das Gewicht der Schaltschranktür so weit in seinen Scharnierbolzensitz eingeschoben wird, bis der Anschlag eine Oberseite des Bolzensitzes erreicht, an welcher der Anschlag zur Anlage kommt.

Das Positionieren kann das Positionieren eines ersten Scharnierbolzens in einer ersten Montagehilfsposition und das Positionieren eines zweiten Scharnierbolzens, der unterhalb des ersten Scharnierbolzens und oberhalb eines untersten Scharnierbolzen angeordnet ist, in einer zweiten Montagehilfsposition aufweisen, wobei der zweite Scharnierbolzen um eine Länge aus seinem Bolzensitz herausragt, die kleiner als eine Länge ist, um die der erste Scharnierbolzen aus seinem Bolzensitz herausragt und die größer als eine Länge ist, um die der unterste Scharnierbolzen aus seinem untersten Bolzensitz herausragt.

Weitere Einzelheiten der Erfindung werden anhand der nachstehenden Figuren erläutert. Dabei zeigt:
- Figur 1: einen Schaltschrank, der eine Scharnieranordnung gemäß dem Stand der Technik aufweist;
- Figur 2: in perspektivischer Darstellung eine korpusseitige Scharnierhälfte gemäß einer Ausführungsform der Erfindung;
- Figur 3: eine Schnittansicht einer korpusseitigen Scharnierhälfte in einer ersten Montagehilfsposition;
- Figur 4: die Ausführungsform gemäß Figur 3 in einer zweiten Montagehilfsposition;
- Figur 5: die Ausführungsform gemäß den Figuren 3 und 4 in der Endposition;
- Figur 6: einen Horizontalquerschnitt durch eine weitere Ausführungsform einer korpusseitigen Scharnierhälfte; und
- Figur 7: eine Ausführungsform eines Scharnierbolzens, der kompatibel zu den Scharnierhälften gemäß den Figuren 2 bis 6 ist.

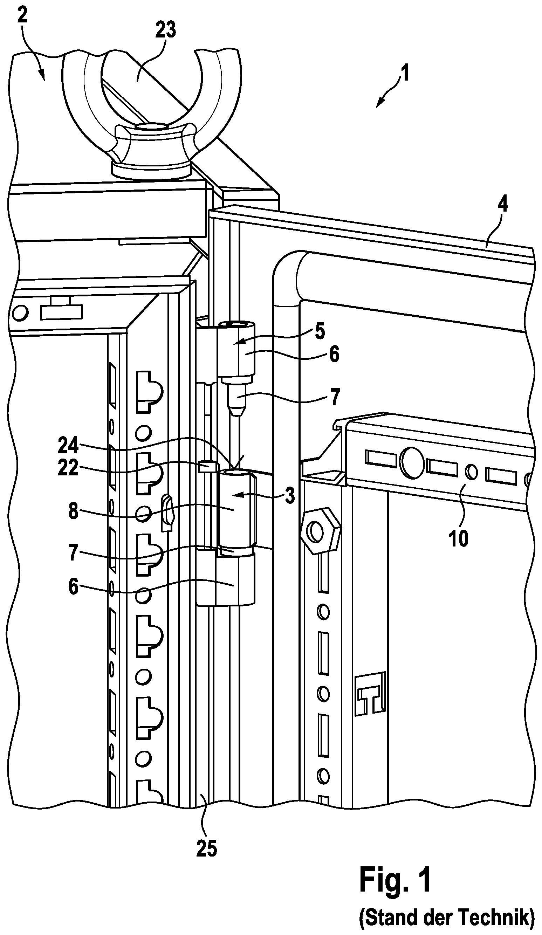

Die Figur 1 zeigt einen Schaltschrank 1 gemäß einer Ausführungsform aus dem Stand der Technik. Der Schaltschrank 1 weist einen Schaltschrankkorpus 2 auf, der im Wesentlichen aus einem Rahmengestell 25 und daran festgelegten Flachteilen, beispielsweise einem Dachelement 2, Seitenelementen 23 und einem Türelement 4 besteht. Das Türelement 4 ist über eine Anordnung aus drei gleichartig ausgebildeten und vertikal übereinander angeordneten Scharnieren 3 an einem Vertikalprofil des Rahmengestells 25 festgelegt. Das Scharnier 3 weist eine türseitige Scharnierhälfte 5 mit zwei gegenüberstehenden Bolzensitzen 6 auf, aus denen jeweils ein Scharnierbolzen 7 heraussteht, die einander zugewandt sind. Das Scharnier 3 ist demgemäß als ein sogenanntes Aushängescharnier ausgebildet. Die türseitige Scharnierhälfte 8 ist eine gebogene Blechlasche, die an einer Innenseite des Türelements 4 festgeschweißt ist. Die Scharnierbolzen 7 sind unverstellbar in ihrem jeweiligen Bolzensitz 6 aufgenommen, beispielsweise darin eingepresst oder eingeschweißt. Zur Vermeidung eines ungewollten Aushängens der Tür 4 weist die schrankseitige Scharnierhälfte 5 einen Aushängeschutz 22 auf. Weitere Einzelheiten des in Figur 1 gezeigten Schaltschranks 1 aus dem Stand der Technik sind in der DE 10 2016 117 378 B3 beschrieben.

Gattungsgemäße Schaltschränke 1 weisen häufig eine Höhe von ungefähr 2 Metern auf, wobei sich auch die Schaltschranktür 4 zur Erzielung eines möglichst großen Öffnungsmaßes über die gesamte Höhe des Schaltschranks 1 erstreckt, so dass für das Einhängen der Schaltschranktür 4 die Schaltschranktür 4 über ihre gesamte vertikale Länge parallel zu dem Schaltschrankrahmengestell 25, insbesondere zu einem Vertikalprofil dieses ausgerichtet werden muss, an welchem die Tür 4 über drei äquidistant zueinander angeordnete Scharniere 3 festgelegt werden kann. Bei der Ausführungsform gemäß Figur 1 sind demgemäß drei schrankseitige Scharnierhälften 5 äquidistant an dem Schaltschrankrahmengestell festgelegt, während die Schaltschranktür 4 an ihrer in Figur 1 gezeigten Innenseite unter demselben Abstand äquidistant zueinander beabstandet drei angeschweißte türseitige Scharnierhälften 8 aufweist, die, um die Schaltschranktür 4 in den Korpus 2 einzuhängen, gleichzeitig mit einem jeweiligen Scharnierbolzen 7 in die Flucht gebracht werden müssen, um sie auf die Scharnierbolzen 7 aufzusetzen. Dies ist mit erheblichem Montageaufwand verbunden, da die als Blechteile ausgebildeten Schaltschranktüren 4 mit innenliegendem Türrohrrahmen 10 und gegebenenfalls weiteren Anbauten ein erhebliches Gewicht aufweisen können.

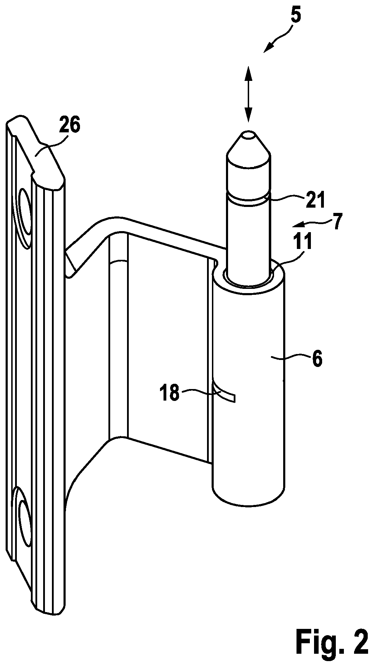

Zur Lösung dieser Problematik schlägt die Erfindung eine Scharnieranordnung vor, die sich dadurch von den aus dem Stand der Technik bekannten Scharnieranordnungen unterscheidet, dass der Scharnierbolzen 7 mindestens eines Scharniers 3 eine Montagehilfsposition aufweist, in der er um eine Länge aus seinem ersten Bolzensitz 6 heraussteht, die größer als eine Länge ist, um die ein zweiter Scharnierbolzen 7 einer zweiten korpusseitigen Scharnierhälfte 5 eines zweiten Scharniers 3 aus seinem Bolzensitz 6 heraussteht. Eine derartige schaltschrankseitige Scharnierhälfte 5 ist in Figur 2 gezeigt und kann beispielsweise dazu eingerichtet sein, die Scharnierhälfte 5, wie sie die Ausführungsform gemäß Figur 1 aus dem Stand der Technik zeigt, zu ersetzen. Die türseitigen Scharnierhälften können identisch übernommen werden. Insbesondere sind die nachfolgend beschriebenen korpusseitigen Scharnierhälften mit der in Figur 1 gezeigten türseitigen Scharnierhälfte kompatibel. Zur einfachen Veranschaulichung ist daher in Figur 2 und den folgenden Darstellungen beispielhafter Ausführungsformen lediglich die korpusseitige Scharnierhälfte 5 gezeigt.

Analog zu der aus dem Stand der Technik bekannten korpusseitigen Scharnierhälfte 5 weist die erfindungsgemäße Scharnierhälfte 5 gemäß Figur 2 einen Montageflansch 26 auf, über den die korpusseitige Scharnierhälfte 5 an einem Vertikalprofil eines Rahmengestells eines Schaltschranks festgelegt werden kann. Über einen gebogenen Steg ist ein Bolzensitz 6 mit dem Befestigungsflansch 26 unter einem Abstand verbunden. In dem Bolzensitz 6 ist der Scharnierbolzen in seiner Vertikalrichtung verstellbar aufgenommen. An seinem oberen Ende weist der Bolzen 7 eine Einkerbung 21 auf, welche das manuelle Verstellen des Bolzens 7 in der Vertikalrichtung erleichtern soll. Der Bolzensitz 6 weist an seinem Außenumfang eine Federaufnahme 18 auf, welche ein Durchbruch durch den Bolzensitz 6 ist, über welchen ein Außenumfang des Bolzens 7 von außerhalb des Bolzensitzes 6 zugänglich ist. In der Federaufnahme 18 ist ein nicht erkennbares Federelement 14 aufgenommen, das in ebenfalls nicht erkennbare Rastkerben am Außenumfang des Scharnierbolzens 7 eingreift, damit der Scharnierbolzen 7 in seiner mindestens einen Montagehilfsposition eine definierte Rastposition einnimmt. Dies wird mit Bezug auf die nachfolgenden Figuren näher erläutert.

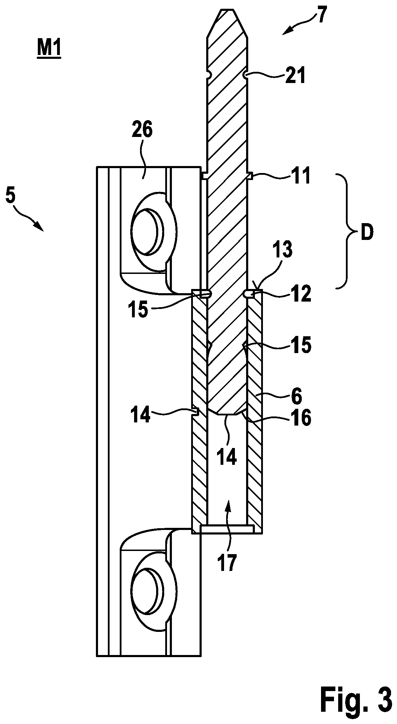

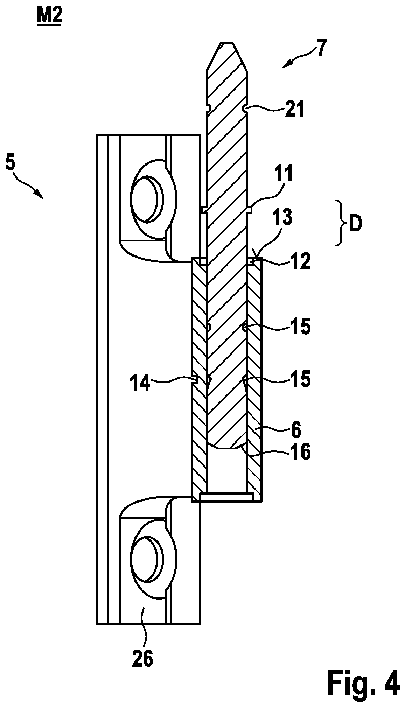

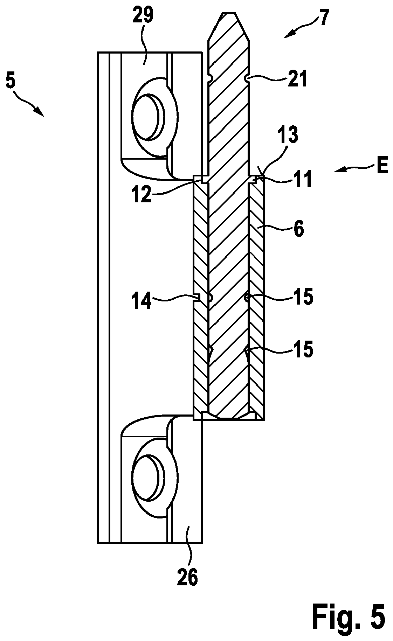

Die Figuren 3 bis 5 zeigen eine Ausführungsform einer korpusseitigen Scharnierhälfte 5 bei drei unterschiedlichen Stellpositionen des Scharnierbolzens 7. Die drei Stellpositionen können beispielsweise den Stellpositionen der Scharnierbolzen 7 eines Schaltschrankkorpus vor der Montage einer Schaltschranktür entsprechen, der drei übereinander angeordnete gleichartige korpusseitige Scharnierhälften 5 aufweist. Dabei könnte zum Beispiel eine obere korpusseitige Scharnierhälfte 5 eine Stellposition des Scharnierbolzens 7 aufweisen, wie sie in Figur 3 gezeigt ist. Eine mittlere korpusseitige Scharnierhälfte könnte eine Stellposition des Scharnierbolzens 7 aufweisen, wie sie in Figur 4 gezeigt ist. Eine untere korpusseitige Scharnierhälfte könnte eine Stellposition des Scharnierbolzens 7 aufweisen, wie sie in Figur 5 gezeigt ist.

Die Figur 3 zeigt die korpusseitige Scharnierhälfte 5 in einer maximal ausgezogenen Rastposition die einer ersten Montagehilfsposition M1 entspricht, bei der beispielsweise auch der Anschlag 11 einen Abstand D zur Oberseite 13 des Bolzensitzes 6 aufweist, der größer als der Abstand D in der weiteren Montagehilfsposition M2 des Bolzens 7 gemäß Figur 4 ist. Wenn beispielsweise die in den Figuren 3 bis 5 gezeigten korpusseitigen Scharnierhälften 5 in ihrer jeweiligen Stellposition an einem Vertikalprofil eines Schaltschrankrahmenprofils vertikal übereinander in der zuvor beschriebenen Abfolge angeordnet sind, so kann beim Ansetzen der Schaltschranktür zunächst die oberste türseitige Scharnierhälfte auf das obere freie Ende des Scharnierbolzens 7 gemäß Figur 3 aufgesetzt werden, während die darunter liegenden türseitigen Scharnierhälften mit dem ihnen jeweils zugeordneten Scharnierbolzen 7 noch nicht in Eingriff stehen. Durch Absenken der Schaltschranktür gegenüber dem Schaltschrankkorpus würde dann zunächst die mittlere türseitige Scharnierhälfte mit dem Scharnierbolzen 7 der mittleren korpusseitigen Scharnierhälfte 5 gemäß Figur 4 in Eingriff treten, bis weiteres Absenken der Schaltschranktür dazu führt, dass auch die unterste türseitige Scharnierhälfte mit dem Bolzen 7 mit der unteren korpusseitigen Scharnierhälfte gemäß Figur 5 in Eingriff tritt.

Das Absenken der Tür führt des Weiteren zunächst dazu, dass die oberste türseitige Scharnierhälfte auf den Anschlag 11 der obersten korpusseitigen Scharnierhälfte tritt und dadurch den Bolzen 7 nach und nach weiter in seinen Bolzensitz 6, insbesondere den Bolzensitzkanal 17 einführt. Weiteres Absenken der Tür führt dann dazu, dass auch die mittlere türseitige Scharnierhälfte auf den Anschlag 11 der mittleren korpusseitigen Scharnierhälfte gemäß Figur 4 tritt und ebenfalls den Bolzen 7 weiter nach unten verlagert. Die unterste korpusseitige Scharnierhälfte 5 gemäß Figur 5 weist bereits den Scharnierbolzen 7 in seiner Endposition E auf, in welcher der Scharnierbolzen 7 mit seinem Anschlag 11, der als umlaufender Ringflansch ausgebildet ist, in einer Aufnahme 12 an der Oberseite 13 des Bolzensitzes 6 eingesetzt ist. In dieser Stellposition fluchtet eine Oberseite des Flansches 11 mit der Oberseite 13 des Bolzensitzes 6, so dass eine ebene Auflagefläche für die türseitige Scharnierhälfte geschaffen ist. Des Weiteren greift das Federelement 14 in die obere der beiden Rastkerben 15 ein, so dass der Scharnierbolzen 7 in der Endposition E arretiert ist.

Auch in den Montagehilfspositionen M1, M2 des Scharnierbolzens gemäß den Figuren 3 und 4 weist der Scharnierbolzen 7 jeweils eine über das Federelement 14 vordefinierte Position auf, wobei das Federelement 14 bei der Montagehilfsposition M1 gemäß Figur 3 eine Auflagefläche für den Scharnierbolzen 7 bildet, an welcher der Scharnierbolzen 7 über eine endseitige Anlaufschräge 16 aufliegt.

In der zweiten Montagehilfsposition M2 gemäß Figur 4 greift das Federelement 14 in eine Rastkerbe 15 am Außenumfang des Scharnierbolzens 7 ein, nämlich in die untere der beiden übereinander angeordneten Rastkerben 15.

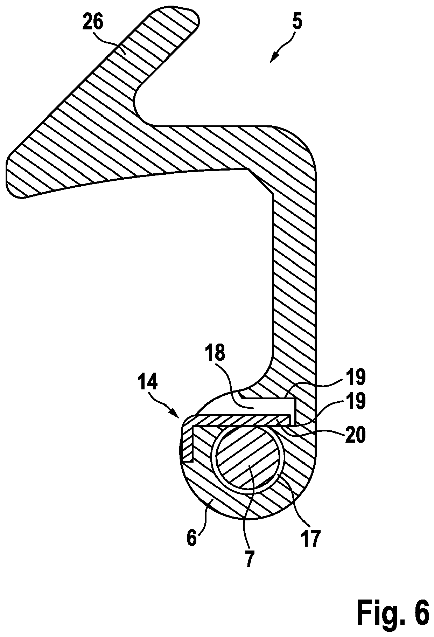

In Figur 6 ist gezeigt, dass das Federelement 14 in einer Federaufnahme 18 angeordnet ist, die in einen ersten Bolzensitzkanal 17 (vgl. auch Figur 3) des Bolzensitzes 6 mündet und von einer Außenseite des Bolzensitzes 6 zugänglich ist. Die Federaufnahme 18 weist sich gegenüberliegende und voneinander beabstandete Lagerflächen 19 für ein Spannende 20 des Federelements 14 auf. Hierbei ist vorgesehen, dass in den Rastpositionen das Spannende 20 an einer Lagerfläche 19 anliegt, die in den Bolzensitzkanal 17 mündet. In einer von der Rastposition unterschiedlichen Position ist das Spannende von dem ersten Scharnierbolzen unter einer Vorspannung gegen die gegenüberliegende Lagerfläche 19 gedrückt, die unter einem Abstand zu dem Bolzensitzkanal 17 angeordnet ist.

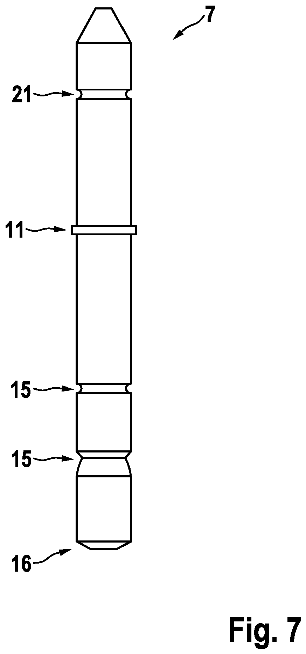

Die Figur 7 veranschaulicht eine beispielhafte Ausführungsform eines Scharnierbolzens 7. Dieser weist von oben nach unten betrachtet an seinem oberen Ende eine Einkerbung 21 auf, die als Ausziehhilfe dient. Darunter weist der Scharnierbolzen 7 unter einem Abstand einen umlaufenden Flansch auf, der einen Anschlag 11 bildet, über welchen im Zusammenwirken mit einer Oberseite einer korpusseitigen Scharnierhälfte eine definierte Endposition des Scharnierbolzens 7 in Bezug auf den Bolzensitz bestimmt ist. Darunter weist der Scharnierbolzen 7 zwei Rastkerben 15 auf, in welche ein Federelement des Bolzensitzes eingreifen kann, um den Scharnierbolzen 7 in der Endposition beziehungsweise der zweiten Montagehilfsposition M2 (vgl. Figuren 4 und 5) zu arretieren. Am unteren Ende weist der Scharnierbolzen 7 eine Anlaufschräge 16 auf, über welche der Scharnierbolzen 7 in der ersten Montagehilfsposition M1 (vgl. Figur 3) auf dem Federelement aufsteht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, solange sie in den Umfang der Ansprüche fallen.

### Bezugszeichenliste

- 1: Schaltschrank
- 2: Schaltschrankkorpus
- 3: Scharnier
- 4: Schaltschranktür
- 5: korpusseitige Scharnierhälfte
- 6: Bolzensitz
- 7: Scharnierbolzen
- 8: türseitige Scharnierhälfte
- 9: Dach
- 10: Türrohrahmen
- 11: Anschlag
- 12: Ausnehmung
- 13: obere Anlagefläche
- 14: Federelement
- 15: Rastkerbe
- 16: Anlaufschräge
- 17: Bolzensitzkanal
- 18: Federaufnahme
- 19: Lagerfläche
- 20: Spannende
- 21: Einkerbung
- 22: Aushängeschutz
- 23: Seitenwand
- 24: Scharnierbolzenaufnahme
- 25: Rahmengestell
- 26: Montageflansch
- D: Abstand
- E: Endposition
- M1: Montagehilfsposition
- M2: weitere Montagehilfsposition

## Patentansprüche

1. Scharnieranordnung für einen Schaltschrank (1), mit einem Schaltschrankkorpus (2) und einer daran über mindestens zwei vertikal übereinander angeordnete Scharniere (3) befestigten Schaltschranktür (4), wobei zumindest ein erstes der Scharniere (3), das oberhalb eines zweiten der Scharniere (3) angeordnet ist, eine erste korpusseitige Scharnierhälfte (5) mit einem aus einem ersten Bolzensitz (6) vertikal nach oben herausstehenden ersten Scharnierbolzen (7) aufweist, auf den eine erste türseitige Scharnierhälfte (8) aufgesteckt ist, wobei der erste Scharnierbolzen (7) eine Montagehilfsposition (M1) aufweist, in der er um eine erste Länge aus dem ersten Bolzensitz (6) heraussteht, die größer als eine zweite Länge ist, um die ein zweiter Scharnierbolzen (7) einer zweiten korpusseitigen Scharnierhälfte (5) des zweiten Scharniers (3) aus seinem zweiten Bolzensitz (6) vertikal nach oben heraussteht, **dadurch gekennzeichnet, dass** der erste Scharnierbolzen (7) zwischen der Montagehilfsposition (M1) und einer Endposition (E) in Vertikalrichtung verstellbar in dem ersten Bolzensitz (6) aufgenommen ist, wobei der erste Scharnierbolzen (7) in der Endposition (E) um eine dritte Länge aus dem ersten Bolzensitz (6) heraussteht, die kleiner als die erste Länge ist und die im Wesentlichen identisch zu der zweiten Länge ist, und wobei der erste Scharnierbolzen (7) in der Montagehilfsposition (M1) eine Rastposition einnimmt.

2. Scharnieranordnung nach Anspruch 1, bei der zumindest der erste Scharnierbolzen (7) einen Anschlag (11) aufweist, über den der erste Scharnierbolzen (7) in der Endposition (E) an dem ersten Bolzensitz (6) anliegt, wobei der Anschlag (11) in der Montagehilfsposition (M1) um einen Abstand (D) oberhalb von dem ersten Bolzensitz (6) angeordnet ist.

3. Scharnieranordnung nach Anspruch 2, bei der der Anschlag (11) ein am Außenumfang des Scharnierbolzens (7) vorstehender Flansch, vorzugsweise ein umlaufend vorstehender Flansch ist.

4. Scharnieranordnung nach Anspruch 2 oder 3, bei der der Anschlag (11) in der Endposition (E) in einer Ausnehmung (12) an einer Oberseite des ersten Bolzensitzes (6) aufgenommen ist.

5. Scharnieranordnung nach Anspruch 4, bei der der Anschlag (11) in der Endposition (E) mit einer oberen Anlagefläche (13) des ersten Bolzensitzes (6) fluchtet, so dass der Anschlag (11) und die obere Anlagefläche (13) ein Auflager für die erste türseitige Scharnierhälfte (8) bilden.

6. Scharnieranordnung nach einem der vorangegangenen Ansprüche, bei der der erste Scharnierbolzen (7) eine weitere Montagehilfsposition (M2) aufweist, in der der erste Scharnierbolzen (7) um eine vierte Länge aus dem ersten Bolzensitz (6) heraussteht, die kleiner als die erste Länge ist.

7. Scharnieranordnung nach einem der vorangegangenen Ansprüche, bei der der erste Scharnierbolzen (7) in mindestens einer weiteren Montagehilfsposition (M2) eine Rastposition einnimmt.

8. Scharnieranordnung nach Anspruch 7, bei der in der Rastposition ein an dem ersten Bolzensitz (6) zumindest einseitig festgelegtes Federelement (14) in eine Rastkerbe (15) am Außenumfang des ersten Scharnierbolzens (7) eingreift.

9. Scharnieranordnung nach Anspruch 7 oder 8, bei der der erste Scharnierbolzen (7) in einer weiteren Montagehilfsposition (M2) mit einer Anlaufschräge (16) auf dem Federelement (14) aufliegt.

10. Scharnieranordnung nach Anspruch 8 oder 9, bei der das Federelement (14) in einer in einen ersten Bolzensitzkanal (17) des ersten Bolzensitzes (6) mündenden und von der Außenseite des ersten Bolzensitzes (6) zugänglichen Federaufnahme (18) angeordnet ist.

11. Scharnieranordnung nach Anspruch 10, bei der die Federaufnahme (18) sich gegenüber liegende und voneinander beabstandete Lagerflächen (19) für ein Spannende (20) des Federelements (14) aufweist, wobei in mindestens einer der Rastpositionen das Spannende (20) an einer ersten der beiden Lagerflächen (19) anliegt, die in den Bolzensitzkanal (17) mündet.

12. Scharnieranordnung nach Anspruch 11, bei der der erste Scharnierbolzen (7) in einer von einer der Rastpositionen unterschiedlichen Position das Spannende (20) von dem ersten Scharnierbolzen (7) unter einer Vorspannung gegen die zweite der beiden Lagerflächen (19) gedrückt ist, die unter einem Abstand zu dem Bolzensitzkanal (17) angeordnet ist.

13. Scharnieranordnung nach einem der Ansprüche 2 bis 12, bei der der erste Scharnierbolzen (7) am Außenumfang seines oberen Endes, mit dem der erste Scharnierbolzen (7) in der Endposition (E) aus dem ersten Bolzensitz (6) heraussteht, eine umlaufende Einkerbung (21) aufweist.

14. Verfahren für Montage einer Schaltschranktür (4) an einem Schaltschrankkorpus (2) unter Verwendung einer Scharnieranordnung nach einem der vorangegangenen Ansprüche, wobei das Verfahren die Schritte aufweist:
- Positionieren des Scharnierbolzens (7) einer ersten korpusseitigen Scharnierhälfte (5), die oberhalb von einer zweiten korpusseitigen Scharnierhälfte (5) angeordnet ist, in einer Montagehilfsposition (M1, M2), in der der Scharnierbolzen (7) der ersten korpusseitigen Scharnierhälfte (5) um eine Länge aus seinem Bolzensitz (6) herausragt, die größer als eine Länge ist, um die der Scharnierbolzen (7) der zweiten korpusseitigen Scharnierhälfte (5) aus seinem Bolzensitz (6) herausragt;
- Ansetzen der Schaltschranktür (4) an den Schaltschrankkorpus (2), wobei die erste türseitige Scharnierhälfte (8), die oberhalb von einer zweiten türseitigen Scharnierhälfte (8) angeordnet ist, nur anteilig auf den Scharnierbolzen (7) der ersten korpusseitigen Scharnierhälfte (5) aufgeschoben wird, wobei die zweite türseitige Scharnierhälfte (8) vollständig oberhalb von der zweiten korpusseitigen Scharnierhälfte (5) angeordnet ist;
- Ausrichten der Schaltschranktür (4) in Bezug auf den Schaltschrankkorpus (2), so dass eine Scharnierbolzenaufnahme (24) der zweiten türseitigen Scharnierhälfte (8) mit dem Scharnierbolzen (7) der zweiten korpusseitigen Scharnierhälfte (5) fluchtet;
- Absenken der Schaltschranktür (4), wobei die zweite türseitige Scharnierhälfte (8) auf den Scharnierbolzen (7) der zweiten korpusseitigen Scharnierhälfte (5) ausgeschoben wird, wobei der erste Scharnierbolzen (7) aus der Montagehilfsposition (M1, M2) in die Endposition (E) überführt wird.

15. Verfahren nach Anspruch 14, bei dem das Positionieren eines ersten Scharnierbolzens (7) in einer ersten Montagehilfsposition (M1) und das Positionieren eines zweiten Scharnierbolzens (7), der unterhalb des ersten Scharnierbolzens (7) und oberhalb eines untersten Scharnierbolzens (7) angeordnet ist, in einer zweiten Montagehilfsposition (M2) aufweist, wobei der zweite Scharnierbolzen (7) um eine Länge aus seinem Bolzensitz (6) herausragt, die kleiner als eine Länge ist, um die der erste Scharnierbolzen (7) aus seinem Bolzensitz (6) herausragt und die größer als eine Länge ist, um die der unterste Scharnierbolzen (7) aus seinem untersten Bolzensitz (6) herausragt.

## Claims

1. A hinge arrangement for a switch cabinet (1), having a switch cabinet body (2) and a switch cabinet door (4) fastened thereto by means of at least two hinges (3) arranged vertically one above the other, at least a first of the hinges (3) being arranged above a second of the hinges (3), has a first carcass-side hinge half (5) with a first hinge pin (7) which projects vertically upwards out of a first pin seat (6) and onto which a first door-side hinge half (8) is fitted, the first hinge pin (7) having an auxiliary assembly position (M1) in which it projects out of the first pin seat (6) by a first length, which is greater than a second length by which a second hinge pin (7) of a second carcass-side hinge half (5) of the second hinge (3) projects vertically upwards from its second pin seat (6), **characterized in that** the first hinge pin (7) is accommodated in the first pin seat (6) such that it can be adjusted in the vertical direction between the auxiliary assembly position (M1) and an end position (E), wherein the first hinge pin (7) in the end position (E) protrudes from the first pin seat (6) by a third length which is smaller than the first length and which is substantially identical to the second length, and wherein the first hinge pin (7) in the auxiliary assembly position (M1) assumes a latching position.

2. The hinge arrangement according to claim 1, in which at least the first hinge pin (7) has a stop (11) via which the first hinge pin (7) bears against the first pin seat (6) in the end position (E), the stop (11) being arranged a distance (D) above the first pin seat (6) in the auxiliary assembly position (M1).

3. The hinge arrangement of claim 2, wherein the stop (11) is a flange projecting on the outer periphery of the hinge pin (7), preferably a circumferentially projecting flange.

4. The hinge arrangement according to claim 2 or 3, wherein the stop (11) in the end position (E) is received in a recess (12) on an upper side of the first pin seat (6).

5. The hinge arrangement of claim 4, wherein the stop (11) is aligned with an upper abutment surface (13) of the first pin seat (6) in the end position (E) so that the stop (11) and the upper abutment surface (13) form a support for the first door-side hinge half (8).

6. The hinge arrangement according to any one of the preceding claims, wherein the first hinge pin (7) has a further auxiliary mounting position (M2) in which the first hinge pin (7) protrudes from the first pin seat (6) by a fourth length smaller than the first length.

7. The hinge arrangement according to any one of the preceding claims, in which the first hinge pin (7) assumes a latching position in at least one further auxiliary assembly position (M2).

8. The hinge arrangement according to claim 7, in which, in the latching position, a spring element (14) fixed to the first pin seat (6) at least on one side engages in a latching notch (15) on the outer circumference of the first hinge pin (7).

9. The hinge arrangement according to claim 7 or 8, wherein the first hinge pin (7) rests on the spring element (14) with a run-up slope (16) in a further auxiliary assembly position (M2).

10. The hinge arrangement according to claim 8 or 9, wherein the spring element (14) is arranged in a spring receptacle (18) opening into a first pin seat channel (17) of the first pin seat (6) and accessible from the outside of the first pin seat (6).

11. The hinge arrangement of claim 10, wherein the spring receptacle (18) includes opposing and spaced apart bearing surfaces (19) for a clamping end (20) of the spring element (14), wherein in at least one of the latching positions the clamping end (20) abuts a first of the two bearing surfaces (19) that opens into the pin seat channel (17).

12. The hinge arrangement according to claim 11, wherein said first hinge pin (7) in a position different from one of said latching positions, said clamping end (20) is pressed by said first hinge pin (7) under a bias against the second of said two bearing surfaces (19) located at a distance from said pin seat channel (17).

13. The hinge arrangement according to any one of claims 2 to 12, wherein the first hinge pin (7) has a circumferential indentation (21) at the outer periphery of its upper end with which the first hinge pin (7) protrudes from the first pin seat (6) in the end position (E).

14. A method for mounting a control cabinet door (4) to a control cabinet body (2) using a hinge arrangement according to any one of the preceding claims, the method comprising the steps of:
- Positioning the hinge pin (7) of a first carcase-side hinge half (5), which is arranged above a second carcase-side hinge half (5), in an auxiliary assembly position (M1, M2), in which the hinge pin (7) of the first carcase-side hinge half (5) projects from its pin seat (6) by a length which is greater than a length by which the hinge pin (7) of the second carcase-side hinge half (5) projects from its pin seat (6);
- Attaching of the switch cabinet door (4) to the switch cabinet body (2), wherein the first door-side hinge half (8), which is arranged above a second door-side hinge half (5), is pushed only partially onto the hinge pin (7) of the first body-side hinge half (5), wherein the second door-side hinge half (8) is arranged completely above the second body-side hinge half (5);
- Aligning the control cabinet door (4) with respect to the control cabinet body (2) so that a hinge pin receptacle (24) of the second door-side hinge half (8) is aligned with the hinge pin (7) of the second body-side hinge half (5);
- Lowering the control cabinet door (4), whereby the second door-side hinge half (8) is pushed onto the hinge pin (7) of the second carcase-side hinge half (5), whereby the first hinge pin (7) is transferred from the auxiliary assembly position (M1, M2) to the end position (E).

15. The method of claim 14, comprising positioning a first hinge pin (7) in a first auxiliary assembly position (M1) and positioning a second hinge pin (7) located below the first hinge pin (7) and above a lowermost hinge pin (7) in a second auxiliary assembly position (M2), wherein the second hinge pin (7) protrudes from its pin seat (6) by a length that is less than a length by which the first hinge pin (7) protrudes from its pin seat (6) and that is greater than a length by which the lowermost hinge pin (7) protrudes from its lowermost pin seat (6).

## Revendications

1. Disposition de charnière pour une armoire de commande (1), avec un corps d'armoire de commande (2) et une porte d'armoire de commande (4) fixée à celui-ci par l'intermédiaire d'au moins deux charnières (3) superposées, dans lequel au moins une première des charnières (3), qui est disposée au-dessus d'une deuxième des charnières (3), une première moitié de charnière du côté du corps (5), avec une première tige de charnière (7) sortant verticalement vers le haut hors d'un premier siège de tige (6), sur laquelle une première moitié de charnière côté porte (8) est enfichée, dans lequel la première tige de charnière (7) présente une position d'aide au montage (M1) dans laquelle elle sort du premier siège de tige (6) d'une première longueur, qui est supérieure à une deuxième longueur dont une deuxième tige de charnière (7) d'une deuxième moitié de charnière côté corps (5) de la deuxième charnière (3) sort de son deuxième siège de tige (6) verticalement vers le haut, **caractérisé en ce que** la première tige de charnière (7) est logée dans le premier siège de tige (6) de manière réglable dans la direction verticale entre la position d'aide au montage (M1) et une position finale (E), dans lequel la première tige de charnière (7), dans la position finale (E), sort du premier siège de tige (6) d'une troisième longueur qui est inférieure à la première longueur et qui est globalement identique à la deuxième longueur et dans lequel la première tige de charnière (7) adopte, dans la position d'aide au montage (M1), une position d'encliquetage.

2. Disposition de charnière selon la revendication 1, dans laquelle l'au moins une première tige de charnière (7) comprend une butée (11) par l'intermédiaire de laquelle la première tige de charnière (7) s'appuie, dans la position finale (E), contre le premier siège de tige (6), dans lequel la butée (11) est disposée, dans la position d'aide au montage (M1) à une distance (D) au-dessus du premier siège de tige (6).

3. Disposition de charnière selon la revendication 2, dans laquelle la butée (11) est une bride en saillie sur la circonférence externe de la tige de charnière (7), de préférence une bride en saillie sur la périphérie.

4. Disposition de charnière selon la revendication 2 ou 3, dans laquelle la butée (11) est logée, dans la position finale (E), dans un évidement (12) sur un côté supérieur du premier siège de tige (6).

5. Disposition de charnière selon la revendication 4, dans laquelle la butée (11) est alignée, dans la position finale (E), avec une surface d'appui supérieure (13) du premier siège de tige (6), de façon à ce que la butée (11) et la surface d'appui supérieure (13) forment un support pour la première moitié de charnière côté porte (8).

6. Disposition de charnière selon l'une des revendications précédentes, dans laquelle la première tige de charnière (7) présente une position d'aide au montage supplémentaire (M2), dans laquelle la première tige de charnière (7) sort du premier siège de tige (6) d'une quatrième longueur qui est inférieure à la première longueur.

7. Disposition de charnière selon l'une des revendications précédentes, dans laquelle la première tige de charnière (7) adopte, dans au moins une position d'aide au montage supplémentaire (M2), une position d'encliquetage.

8. Disposition de charnière selon la revendication 7, dans laquelle, dans la position d'encliquetage, un élément à ressort (14), fixé au moins d'un côté au premier siège de tige (6), s'emboîte dans une encoche d'encliquetage (15) sur la circonférence externe de la première tige de charnière (7).

9. Disposition de charnière selon la revendication 7 ou 8, dans laquelle la première tige de charnière (7) s'appuie, dans une position d'aide au montage supplémentaire (M2), avec un chanfrein d'entrée (16), sur l'élément à ressort (14).

10. Disposition de charnière selon la revendication 8 ou 9, dans laquelle l'élément à ressort (14) est disposé dans un logement de ressort (18) débouchant dans un premier canal de siège de tige (17) du premier siège de tige (6) et accessible du côté externe du premier siège de tige (6).

11. Disposition de charnière selon la revendication 10, dans laquelle le logement de ressort (18) comprend des surfaces de palier opposées et distantes entre elles pour une extrémité de serrage (20) de l'élément à ressort (14), dans laquelle, dans au moins une des positions d'encliquetage, l'extrémité de serrage (20) s'appuie contre une première des deux surfaces de palier (19) qui débouche dans le canal de siège de tige (17).

12. Disposition de charnière selon la revendication 11, dans laquelle la première tige de charnière (7) est comprimée dans une position différente d'une des positions d'encliquetage de l'extrémité de serrage (20), par la première tige de charnière (7) sous une précontrainte contre la deuxième des deux surfaces de palier (19), qui est disposée à une certaine distance du canal de siège de tige (17).

13. Disposition de charnière selon l'une des revendications 2 à 12, dans laquelle la première tige de charnière (7) comprend, sur la circonférence externe de son extrémité supérieure, avec laquelle la première tige de charnière (7) sort, dans la position finale (E), du premier siège de tige (6), une rainure périphérique (21).

14. Procédé pour le montage d'une porte d'armoire de commande (4) sur un corps d'armoire de commande (2) à l'aide d'une disposition de charnière selon l'une des revendications précédentes, dans lequel le procédé comprend les étapes suivantes :
- positionnement de la tige de charnière (7) d'une première moitié de charnière côté corps (5), qui est disposée au-dessus d'une deuxième moitié de charnière côté corps (5), dans une position d'aide au montage (M1, M2) dans laquelle la tige de charnière (7) de la première moitié de charnière côté corps (5) sort de son siège de tige (6) d'une longueur qui est supérieure à une longueur dont la tige de charnière (7) de la deuxième moitié de charnière côté corps (5) sort de son siège de tige (6) ;
- fixation de la porte d'armoire de commande (4) au corps d'armoire de commande (2), dans lequel la première moitié de charnière côté porte (8), qui est disposée au-dessus d'une deuxième moitié de charnière côté porte (8), n'est poussée que partiellement sur la tige de charnière (7) de la première moitié de charnière côté corps (5), dans lequel la deuxième moitié de charnière côté porte (8) est disposée entièrement au-dessus de la deuxième moitié de charnière côté corps (5) ;
- orientation de la porte d'armoire de commande (4) par rapport au corps d'armoire de commande (2), de façon à ce qu'un logement de tige de charnière (24) de la deuxième moitié de charnière côté porte (8) soit alignée avec la tige de charnière (7) de la deuxième moitié de charnière côté corps (5) ;
- abaissement de la porte d'armoire de commande (4), dans lequel la deuxième moitié de charnière côté porte (8) est poussée vers l'extérieur sur l'axe de charnière (7) de la deuxième moitié de charnière côté corps (5), dans lequel la première tige de charnière (7) passe de la position d'aide au montage (M1, M2) à la position finale (E).

15. Procédé selon la revendication 14, dans lequel le positionnement comprend le positionnement d'une première tige de charnière (7) dans une première position d'aide au montage (M1) et le positionnement d'une deuxième tige de charnière (7), qui est disposée en dessous de la première tige de charnière (7) et au-dessus d'une tige de charnière (7) inférieure, dans une deuxième position d'aide au montage (M2), dans lequel la deuxième tige de charnière (7) sort de son siège de tige (6) d'une longueur qui est inférieure à une longueur dont la première tige de charnière (7) sort de son siège de tige (6) et qui est supérieure à une longueur dont la tige de charnière inférieure (7) sort de son siège de tige inférieur (6).
